# EUROPEAN PATENT SPECIFICATION

(11) **EP 4 111 338 B1**
(45) Date of publication and mention of the grant of the patent: **13.08.2025**
(21) Application number: 20712939.6
(22) Date of filing: 19.03.2020
(51) Int. Cl.: G06F 21/52

(54) **CODE INTEGRITY PROTECTION IN DEVICES HAVING LIMITED COMPUTING RESOURCES**
CODEINTEGRITÄTSSCHUTZ IN VORRICHTUNGEN MIT BEGRENZTEN COMPUTERRESSOURCEN
PROTECTION D'INTÉGRITÉ DE CODE DANS DES DISPOSITIFS AYANT DES RESSOURCES DE CALCUL LIMITÉES

(43) Date of publication of application: 04.01.2023
(73) Proprietor: Huawei Technologies Co., Ltd., Shenzhen, Guangdong 518129 (CN)
(72) Inventor: POGORELIK, Oleg, 80992 Munich (DE); SHURMAN, Michael, 80992 Munich (DE)
(74) Representative: Gill Jennings & Every LLP
(86) International application number: PCT/EP2020/057618
(87) International publication number: WO 2021/185447

(56) References cited:
- KR-A- 20150 026 716
- US-A1- 2002 138 554
- US-A1- 2003 159 090
- US-A1- 2014 025 844
- US-A1- 2014 380 469
- US-A1- 2015 067 855
- ROBERT BRYAN PAUL ET AL: "Practical Approaches Towards Securing Edge Devices in Smart Grid", 2019 8TH INTERNATIONAL CONFERENCE ON POWER SYSTEMS (ICPS), IEEE, 20 December 2019 (2019-12-20), pages 1 - 6, XP033757299, DOI: 10.1109/ICPS48983.2019.9067747
- YOUNG-GEUN CHOI ET AL: "Proactive Code Verification Protocol in Wireless Sensor Network", 26 August 2007, COMPUTATIONAL SCIENCE AND ITS APPLICATIONS - ICCSA 2007; [LECTURE NOTES IN COMPUTER SCIENCE], SPRINGER BERLIN HEIDELBERG, BERLIN, HEIDELBERG, PAGE(S) 1085 - 1096, ISBN: 978-3-540-74475-7, XP019068405
- CLAUDE CASTELLUCCIA ET AL: "On the difficulty of software-based attestation of embedded devices", COMPUTER AND COMMUNICATIONS SECURITY, ACM, 2 PENN PLAZA, SUITE 701 NEW YORK NY 10121-0701 USA, 9 November 2009 (2009-11-09), pages 400 - 409, XP058271048, ISBN: 978-1-60558-894-0, DOI: 10.1145/1653662.1653711
- LORENZO MARTIGNONI ET AL: "Conqueror: Tamper-Proof Code Execution on Legacy Systems", 8 July 2010, DETECTION OF INTRUSIONS AND MALWARE, AND VULNERABILITY ASSESSMENT, SPRINGER BERLIN HEIDELBERG, BERLIN, HEIDELBERG, PAGE(S) 21 - 40, ISBN: 978-3-642-14214-7, XP019146461
- KANG G SHIN ET AL: "Soft Tamper-Proofing via Program Integrity Verification in Wireless Sensor Networks", IEEE TRANSACTIONS ON MOBILE COMPUTING, IEEE SERVICE CENTER, LOS ALAMITOS, CA, US, vol. 4, no. 3, 1 May 2005 (2005-05-01), pages 297 - 309, XP011129201, ISSN: 1536-1233, DOI: 10.1109/TMC.2005.44

## Description

### TECHNICAL FIELD

The present disclosure relates to protecting processing devices against malicious attacks, and, more specifically, but not exclusively, to protecting processing devices against malicious attacks using a security device deployed to verify software code executed by the protected processing devices.

### BACKGROUND

With the constant and rapid evolution of technology, automation has penetrated practically every aspect of modem life. One of the most rapidly spreading trends is the deployment of Internet of Things (IoT) devices, sensors, controllers, and/or the like, for numerous applications.

By their very nature, in order to effectively meet the applicative requirements, most, if not all IoT devices, are engineered with challenging limits in terms of power, performance, cost, etc.

Such IoT devices may typically be low-end devices, which are very limited in their computing resources, for example, in their processing power, storage resources, communication resources, and/or the like.

While the computing resources available to the IoT devices are scarce, thereby making their security fragmented at best, these IoT devices, which are often barely maintained and communicate over relaxed networks, may often be exposed to a wide number of network-originated malicious attacks.

The IoT devices may be protected by deploying software integrity protection measures which may be applied at rest, i.e., verify integrity of software stored on a disk, flash, etc., and in transition during download or upload. Popular software (SW) distribution packages such as, for example, open Secure Sockets Layer (SSL) designed for IoT devices may, therefore, include tools and libraries for SW encryption, signing, hashing, etc., to support file integrity protection at rest, in transfer, as well as checks during loading.

However, many of the network-originated malicious attacks are based on malicious agents (malware, virus) which are injected to the attacked device(s), in order to implement malicious functionality by modifying, in runtime, software code segments executed by the processing device, for example, software, firmware, middleware. Such runtime attacks may be known as software (SW)/firmware (FW) tampering.

Due to the very limited computing resources available in the IoT devices, securing and protecting low-end devices with limited computing resources against runtime tampering malicious attacks may present a major challenge and is, therefore, considered difficult and relatively expensive.

US2002138554A1 relates to method for remotely verifying software integrity. US2003159090A1 relates to method of detecting malicious code. US2014025844A1 relates to verify command for a peripheral device. US2014380469A1 relates to method and device for detecting software-tampering. US2015067855A1 relates to server and method for attesting application in smart device using random executable code. KR20150026716A relates to server and method for attesting application in smart device using random executable code.

ROBERT BRYAN PAUL ET AL, "Practical Approaches Towards Securing Edge Devices in Smart Grid", 2019 8TH INTERNATIONAL CONFERENCE ON POWER SYSTEMS (ICPS), IEEE, (20191220), doi:10.1109/ICPS48983.2019.9067747, pages 1 - 6, relates to securing edge devices in smart grid.

YOUNG-GEUN CHOI ET AL, Proactive Code Verification Protocol in Wireless Sensor Network, COMPUTATIONAL SCIENCE AND ITS APPLICATIONS - ICCSA 2007; [LECTURE NOTES IN COMPUTER SCIENCE], SPRINGER BERLIN HEIDELBERG, BERLIN, HEIDELBERG, PAGE(S) 1085 - 1096, (20070826), ISBN 978-3-540-74475-7, relates to proactive code verification protocol in wireless sensor network.

CLAUDE CASTELLUCCIA ET AL, "On the difficulty of software-based attestation of embedded devices", COMPUTER AND COMMUNICATIONS SECURITY, ACM, 2 PENN PLAZA, SUITE 701 NEW YORK NY 10121-0701 USA, (20091109), doi:10.1145/1653662.1653711, ISBN 978-1-60558-894-0, pages 400 - 409, relates to software-based attestation of embedded devices.

LORENZO MARTIGNONI ET AL, Conqueror: Tamper-Proof Code Execution on Legacy Systems, DETECTION OF INTRUSIONS AND MALWARE, AND VULNERABILITY ASSESSMENT, SPRINGER BERLIN HEIDELBERG, BERLIN, HEIDELBERG, PAGE(S) 21 - 40, (20100708), ISBN 978-3-642-14214-7, relates to tamper-proof code execution on legacy systems.

KANG G SHIN ET AL, "Soft Tamper-Proofing via Program Integrity Verification in Wireless Sensor Networks", IEEE TRANSACTIONS ON MOBILE COMPUTING, IEEE SERVICE CENTER, LOS ALAMITOS, CA, US, (20050501), vol. 4, no. 3, doi:10.1109/TMC.2005.44, ISSN 1536-1233, pages 297 - 309, relates to soft tamper-proofing via program integrity verification in wireless sensor networks.

### SUMMARY

An objective of the embodiments of the present disclosure is to provide a solution which mitigates or solves the drawbacks and problems of conventional solutions.

The invention has been defined in the independent claims. Further specific technical features have been defined in the dependent claims.

The present disclosure aims at providing a solution for protecting devices, specifically low-end devices with limited resources, by deploying a security controller operatively connected to the protected devices via a network for verifying an integrity and reliability of executable software code executed by the protected devices.

According to a first aspect of the present disclosure, there is provided a security controller comprising a memory and circuitry, the circuitry configured to:
- load a first copy of an executable code segment to the memory,
- compute a first security code based on a randomly manipulated first copy of the executable code segment,
- generate a verification code segment adapted to cause a protected device to compute a second security code based on a randomly manipulated second copy of the executable code segment upon the second copy of the executable code segment being loaded in a memory of the protected device,
- transmit the verification code segment to the protected device,
- receive the second security code from the protected device,
- compare the first security code and the second security code, and
- determine a compromise of the protected device in reaction to the second security code not matching the first security code.

According to a second aspect of the present disclosure, there is provided a computer-implemented method of detecting a potentially compromised protected device, comprising:
- loading a first copy of an executable code segment to a memory of a security controller;
- computing a first security code based on the randomly manipulated first copy of the executable code segment;
- generating a verification code segment adapted to cause a protected device to compute a second security code based on a randomly manipulated second copy of the executable code segment upon the second copy of the executable code segment being loaded in a memory of the protected device;
- transmitting the verification code segment to the protected device;
- receiving the second security code from the protected device;
- comparing the first security code and the second security code; and
- determining a compromise of the protected device in reaction to the second security code not matching the first security code.

According to a third aspect of the present disclosure, there is provided a protected device, comprising a memory and circuitry, the circuitry configured to:
- load a copy of an executable code segment to the memory,
- receive a verification code segment from a security controller, the verification code segment being adapted to cause the protected device to compute a security code based on a randomly manipulated copy of the executable code segment,
- execute the verification code segment,
- compute the security code based on the randomly manipulated copy of the executable code segment, and
- transmit the security code to the security controller.

According to a fourth aspect of the present disclosure, there is provided a computer-implemented method of detecting a potential compromise at a protected device, comprising:
- loading a copy of an executable code segment to a memory of the protected device;
- receiving a verification code segment from a security controller, the verification code segment being adapted to cause the protected device to compute a security code based on a randomly manipulated copy of the executable code segment;
- computing the security code based on the randomly manipulated copy of the executable code segment; and
- transmitting the security code to the security controller.

According to a fifth aspect of the present disclosure, there is provided a computer readable medium comprising instructions executable by a computer, which, when executed by the computer, cause the computer to perform a method according to the second or fourth aspect.

According to the claimed disclosure, the generated verification code segment is adapted such that the random manipulation applied by the verification code segment to the second plurality of bytes in the second copy is identical to the random manipulation applied to the first plurality of bytes in the first copy before computing the first security code.

The protected device may be a low-end device having limited resources, which may present major limitations in its ability to prevent malicious malware from infiltrating into its memory and executing in an attempt to compromise the protected device. Deploying the security controller to protect the low-end device may require the protected device to execute a relatively simple process, thus significantly reducing the computing resources required at the protected device. As such, the use of the security controller may be highly suitable for protecting low-end devices which may be effectively protected regardless of their limited computing resources. Moreover, reducing the computing resources required for their protection may further reduce a cost and/or complexity of the protected device. Furthermore, by computing the second security code for the randomly manipulated version of the copy of the executable code segment, malware(s) infecting the second copy of the executable code segment executed by the protected device may be unable to discover the random manipulation, in order to successfully alter the verification code segment to compute a valid second security code for the infected second copy. This advantage may be highly amplified for the low-end protected devices, since the computations of the malware(s), in attempting to discover the random manipulation, may require significant computing resources which may be unavailable in the low-end protected devices with limited resources. It should be noted that the random manipulation of the first and second copies of the executable code segment, specifically the random manipulation of the first and second plurality of bytes, is only done as part of the computation of the first and second security codes, respectively, and is not actually applied in the memory of the security controller and the memory of the protected device, respectively, where the first and second copies of the executable code segment are loaded. Therefore, the loaded copies of the executable code segment are not affected in any way by the random manipulation and may be correctly executed.

In a further implementation form of the first, second, and/or fifth aspects of the present disclosure, a hash value is computed based on the first copy of the executable code segment using at least one hash function, wherein the first security code comprises the hash value. Hash values are highly effective for computing a limited length fixed size string for the copies of the executable code segment and are, therefore, commonly used for a plurality of applications. Moreover, the hash functions are one-way functions, such that it is impossible to recover the input to the hash function, i.e., the executable code segment from the output hash value.

In a further implementation form of the first, second, and/or fifth aspects of the present disclosure, the random manipulation comprises randomly selecting an address of a first plurality of bytes in the first copy of the executable code segment and excluding, for the computation of the first security code, the first plurality of bytes residing at the randomly selected address from the first copy of the executable code segment. By excluding (skipping) bytes of data residing at the randomly selected address, it may be highly difficult and perhaps even impossible for malware(s) potentially residing in the memory of the protected device to discover the random manipulation and produce a valid second security code accordingly. This implementation has not been claimed as such.

According to the claimed disclosure, the random manipulation comprises randomly selecting an address of a first plurality of bytes in the first copy of the executable code segment and altering, for the computation of the first security code, the first plurality of bytes residing at the randomly selected address in the first copy of the executable code segment. By altering data of bytes residing at the randomly selected address, it may be highly difficult and perhaps impossible for malware(s) potentially residing in the memory of the protected device to discover the random manipulation and produce a valid second security code accordingly; or
the random manipulation comprises selecting an address of a first plurality of bytes and randomly inserting, for the computation of the first security code, the first plurality of bytes residing at the randomly selected address into the first copy of the executable code segment. By inserting additional data bytes at the randomly selected address, it may be highly difficult and perhaps impossible for malware(s) potentially residing in the memory of the protected device to discover the random manipulation and produce a valid second security code accordingly.

In an optional implementation form of the first, second, and/or fifth aspects of the present disclosure, the verification code segment is encoded. Encoding the verification code segment may dramatically increase the challenge for the malware(s) to obtain the verification code segment, since decoding or reversing the encoded verification code segment may require extensive computing resources, which may be unavailable in the protected device, thereby making it unfeasible for the malware(s) to recover the random manipulation and maliciously use it in an attempt to disguise its presence.

In an optional implementation form of the first, second, and/or fifth aspects of the present disclosure, white-box cryptography is applied to encode the verification code segment. White-Box Cryptography (WBC), as known in the art, is widely used for software protection applications. Since WBC implements a cryptographic software algorithm in such a way that cryptographic assets remain secure even when subject to white-box attacks by malware(s), WBC is highly suitable and effective for encoding the verification code segment.

In a further implementation form of the first, second, and/or fifth aspects of the present disclosure, a verification session is performed to verify the executable code segment, wherein the random manipulation is unique for the verification session, such that the verification code segment generated during the verification session is valid only for the verification session. The random manipulation and, hence, the verification code segment being unique and valid for only a single verification session may render useless verification code segment(s) generated in previous verification sessions, thereby making the random manipulation highly robust and immune to replay attacks.

In an optional implementation form of the first, second, and/or fifth aspects of the present disclosure, an action is initiated in reaction to the second security code not being received from the protected device before expiration of a predefined timeout period. Applying the timeout mechanism may form another major hurdle for the malware(s), which, in order to successfully avoid detection, may need to discover the random manipulation and alter the second copy accordingly within the predefined timeout period, which is the time frame defined for the verification session.

In a further implementation form of the first, second, and/or fifth aspects of the present disclosure, the initiated action comprises at least one of transmitting an alert message of the compromise, transmitting a new copy of the executable code segment to the protected device, instructing the protected device to reboot, and instructing the protected device to disconnect from at least one network. Selecting one or more actions initiated in response to a detected compromise of the protected device may allow for high flexibility in the measures applied to counter the possible malicious attack. The action may, thus, be selected according to various aspects, characteristics and/or attributes of the detected attack, for example, attributes and/or operational parameters of the protected device, the nature and/or criticality of the application (executable code segment) executed by the protected device, the type of the detected potential attack, and/or the like.

In a further implementation form of the third, fourth, and/or fifth aspects of the present disclosure, a hash value is computed based on the copy of the executable code segment using at least one hash function, wherein the security code comprises the hash value. As stated herein before, hash values are highly effective for computing a limited length fixed size string for the copies of the executable code segment and are, therefore, commonly used for a plurality of applications. Moreover, the hash functions are one-way functions, such that it is impossible to recover the input to the hash function, i.e., the executable code segment from the output hash value.

In a further implementation form of the third, fourth, and/or fifth aspects of the present disclosure, the random manipulation comprises randomly selecting an address of a plurality of bytes in the copy of the executable code segment and excluding the plurality of bytes residing at the randomly selected address from the copy of the executable code segment. As described herein before, excluding (skipping) bytes of data residing at the randomly selected address may make it highly difficult and perhaps impossible for malware(s) potentially residing in the memory of the protected device to discover the random manipulation and produce a valid second security code accordingly.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

Unless otherwise defined, all technical and/or scientific terms used herein have the same meaning as commonly understood by one of ordinary skill in the art to which the present disclosure pertains. Although methods and materials similar or equivalent to those described herein can be used in the practice or testing of embodiments of the present disclosure, exemplary methods and/or materials are described below. In case of conflict, the patent specification, including definitions, will control. In addition, the materials, methods, and examples are illustrative only and are not intended to be necessarily limiting.

An implementation of the method and/or system of embodiments of the present disclosure can involve performing or completing selected tasks automatically. Moreover, according to actual instrumentation and equipment of embodiments of the method and/or system of the present disclosure, several selected tasks could be implemented by hardware, by software or by firmware or by a combination thereof using an operating system.

For example, hardware for performing selected tasks according to embodiments of the present disclosure could be implemented as a chip or a circuit. As software, selected tasks according to embodiments of the present disclosure could be implemented as a plurality of software instructions being executed by a computer using any suitable operating system. In an exemplary implementationof the present disclosure, one or more tasks according to exemplary embodiments of the method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media for storing instructions and/or data. Optionally, a network connection is provided as well. A display and/or a user input device such as a keyboard or mouse are optionally provided as well.

### BRIEF DESCRIPTION OF THE DRAWINGS

Some embodiments of the present disclosure are herein described, by way of example only, with reference to the accompanying drawings. With specific reference now to the drawings in detail, it is stressed that the particulars are shown by way of example and for purposes of illustrative discussion of embodiments of the present disclosure. In this regard, the description taken with the drawings makes apparent to those skilled in the art how embodiments of the present disclosure may be practiced.

In the drawings:
FIG. 1 shows flow charts of exemplary processes of protecting a processing device by a security controller deployed to verify software code executed by the protected processing device, according to some embodiments of the present disclosure;
FIG. 2 is a schematic illustration of an exemplary system of protecting a processing device by a security controller deployed to verify software code executed by the protected processing device, according to some embodiments of the present disclosure; and
FIG. 3A and FIG. 3B illustrate an exemplary sequence of protecting a processing device by a security controller deployed to verify software code executed by the protected processing device, according to some embodiments of the present disclosure.

### DETAILED DESCRIPTION

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those that comprise at least all the features of an independent claim. Any implementation that does not fall within the scope of the claims does not form part of the invention, but rather included as an illustrative example that is useful for understanding the invention.

The present disclosure, in some embodiments thereof, relates to protecting processing devices against malicious attacks, and, more specifically, but not exclusively, to protecting processing devices against malicious attacks using a security device deployed to verify software code executed by the protected processing devices.

According to some embodiments of the present disclosure, there are provided methods, devices and computer program products for verifying an integrity and reliability of executable software code executed by processing devices, in order to protect the processing devices against malicious attacks initiated by infecting malware and executing at the protected devices in an attempt to compromise the protected devices.

Protection of the devices is based on a security controller deployed to verify one or more software code segments, for example, an application, a process, a utility, a tool, a procedure, an agent, a script and/or the like which are typically executed by the protected devices having network connectivity and capable of communicating with the security controller.

In particular, the protected devices may be low-end devices with limited resources such as, for example, Internet of Things (IoT) devices, sensors, controllers and/or the like comprising limited computing resources, for example, processing resources, storage resources, communication resources, and/or the like.

The security controller may generate a verification software code segment, which is adapted to cause a processing circuit to compute a security code (e.g. a hash value, etc.) for a copy of an executable code segment stored and executed by one or more of the protected devices.

The security controller may locally store and/or have access to a first copy of the executable code segment targeting the protected device(s), which is a validated image of the executable code segment verified to be genuine as originally created and untampered. The first copy may be stored in one or more secure storage resources which may be protected using hardware and/or software means, for example, a Trusted Platform Module (TPM), an Enclave, and/or the like, which may be password-protected, and/or accessed using secure protocol(s).

The security controller may, therefore, load the first copy of the executable code segment into its local memory (e.g., volatile memory) and execute the verification code segment to compute a first security code for the first copy loaded in the memory.

The security controller may further transmit the verification code segment to one or more of the protected devices, which execute a second copy of the executable code segment locally stored and loaded in their local memory.

Each of the protected devices may execute the received verification code segment to compute a second security code for their second copy of the executable code segment and may transmit the computed second security code to the security controller.

The security controller may then compare the second security code computed for the second copy of the executable code segment at the protected device and the first security code computed for the first copy of the executable code segment securely stored by the security controller. In case of a match, the security controller may determine that the second copy is a genuine copy of the executable code segment, since it matches the first copy being the validated image of the executable code segment.

However, in case of no match, the security controller may determine that the second copy may be potentially infected with one or more malware code segments which have been injected and/or infiltrated in the second copy, thus compromising the protected device. In such a case, the security controller may initiate one or more actions, in order to counter the potential compromise of the protected device, for example, transmit an alert message of the potential compromise, transmit a new copy of the executable code segment to the protected device, instruct the protected device to reboot and/or reset, instruct the protected device to disconnect from the network, and/or the like.

Some malware code segments, which may infect the protected device, may be designed and/or configured to disguise their presence by altering the second copy of the executable code segment in a way that computing the security code for the altered infected second copy is identical to the security code, which would be computed for the original and uninfected second copy.

In order to increase an immunity of the verification process against such malware(s), the security controller may configure and/or adapt the verification code segment to cause computation of the security code for a randomly manipulated version of the copy of the executable code segment, such that the security code is computed after applying a random manipulation to the executable code segment copy.

The random manipulation is based on randomly selecting a plurality of addresses in an address range occupied by the copy of the executable code segment in the memory and manipulating the bytes at these randomly selected addresses in one or more ways. For example, a plurality of bytes residing at the randomly selected addresses may be excluded (discarded) for the computation of the security code. This implementation has not been claimed as such.

According to the claimed disclosure, the data of a plurality of bytes residing at the randomly selected addresses is altered (e.g. nullified, filled with a predefined pattern, etc.) for the computation of the security code. Alternatively, according to the claimed disclosure, the additional bytes with a predefined pattern may be inserted at the randomly selected addresses for the computation of the security code.

It should be emphasized that the random manipulation of the copy of the executable code segment, specifically the manipulation of the plurality of bytes residing at the randomly selected addresses, is done only for the computation of the security code and is not actually applied in the memory, where the copy of the executable code segment is loaded. For example, the security code may be computed using one or more security code computation functions which sequentially traverse the bytes of the executable code segment loaded in memory and compute the security code accordingly. In such a case, the random manipulation may be applied on the fly rather than by actually manipulating the executable code segment in the memory during the sequential traversing of the bytes of the executable code segment. As such, the random manipulation, for example, excluding, skipping, inserting, duplicating, altering the plurality of bytes at the randomly selected addresses may be done as part of the security code computation without actually altering the copy of the executable code segment loaded in the memory. Therefore, the loaded copy of the executable code segment is not affected in any way and may correctly execute.

Therefore, even if the protected device is infected with malware(s), these malware(s) may be unable to discover the random manipulation and, hence, may be unable to alter the verification code segment to compute the second security code for the infected second copy to match the first security code computed for the manipulated version of the original and uninfected first copy. The security controller may, therefore, detect that the protected device is potentially infected by malware(s) and is, hence, compromised.

The random manipulation applied in each verification session and, hence, the verification code segment generated in each verification session are unique and different from those applied and generated in any other verification session.

Optionally, in order to further increase a security of the verification process and prevent the malicious malware(s) from obtaining the verification code segment, the security controller may encrypt the verification code segment. The verification code segment may be encoded using one or more encoding methods, algorithms and/or technologies. According to a preferred implementationof the present disclosure, White-Box Cryptography (WBC) is a particularly suitable encoding method.

Encoding the verification code segment may further prevent the malware(s) from recovering and obtaining the verification code segment and may, thus, further improve the security of the code verification process against the malware(s) which may infect the protected devices.

Optionally, the security controller may initiate one or more timeout timers loaded with a predefined timeout period to define a time frame for the verification session. In case the security controller does not receive the second security code from the protected device before expiration of the timeout period, the security controller may determine that the protected device may be compromised by one or more malware code segments.

Protecting the processing devices by verifying the randomly manipulated version of the software code copies executed by the processing devices may present major advantages and benefits compared to existing methods and systems for protecting such devices.

Firstly, since the protected devices may be low-end devices with limited computing resources, such limited resources devices may be incapable to efficiently and effectively execute software integrity protection measures such as, for example, Trusted Execution Environments (TEE), dedicated watchdogs, run time check procedures (e.g. anti-malware, anti-viruses, etc.) and/or the like, as may be done by the existing methods. These software integrity protection measures employed by the existing methods may present major limitation for deployments in the protected devices with limited resources due to one or more reasons. For instance, they require extensive computing resources, and/or dedicated hardware elements, have a major footprint (memory space during runtime), alter execution priorities, and/or the like. Such software integrity protection measures are, therefore, inefficient at best, as they may significantly reduce performance, consume major computing resources, and/or the like, and, in most cases, may be practically unfeasible for the low-end devices due to a lack of sufficient computing resources.

In contrast, deploying the security controller according to the present disclosure to protect the low-end devices may require the protected devices to execute a relatively simple process, thus significantly reducing the computing resources required at the protected devices and making it highly suitable for protecting the low-end devices. Moreover, as the computing resources of the protected devices may be reduced, the cost and/or complexity of the protected devices may also be reduced.

Moreover, by randomly manipulating the copy of the executable code segment, even sophisticated malware(s) designed and configured to alter the local second copy of the executable code segment executed by the protected device may be unable to easily discover the random manipulation in order to alter the second copy accordingly to produce a valid second security code. The computations to discover the random manipulation may require significant computing resources which may be unavailable in the protected devices with limited resources.

Moreover, in case the timeout mechanism is applied, the malware(s) may be unable to discover the random manipulation and alter the second copy accordingly within the time frame defined for the verification session.

Furthermore, since the random manipulation and the verification code segment are unique and valid for only a single verification session, the verification code segment generated in previous verification sessions may not be used and, thus, replay attacks are prevented.

In addition, by encoding the verification code segment, the effort required by the malware(s) to recover is dramatically increased, thereby further reducing the possibility that the malware(s) may obtain the verification code segment and manipulate it to compute a valid second security code for the second copy, while disguising the presence of the malware(s).

Before explaining at least one implementationof the present disclosure in detail, it is to be understood that the present disclosure is not necessarily limited in its application to the details of construction and the arrangement of the components and/or methods set forth in the following description and/or illustrated in the drawings and/or the examples. The present disclosure is capable of other embodiments or of being practiced or carried out in various ways.

As will be appreciated by one skilled in the art, aspects of the present disclosure may be embodied as a system, method or computer program product. Accordingly, aspects of the present disclosure may take the form of an entirely hardware embodiment, an entirely software implementation(including firmware, resident software, micro-code, etc.), or an implementationcombining software and hardware aspects that may all generally be referred to herein as a "circuit", "module", or "system". Furthermore, aspects of the present disclosure may take the form of a computer program product embodied in one or more computer readable medium(s) having computer readable program code embodied thereon.

Any combination of one or more computer readable medium(s) may be utilized. The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer program code comprising computer readable program instructions embodied on a computer readable medium may be transmitted using any appropriate medium, including but not limited to wireless, wire line, optical fiber cable, RF, etc., or any suitable combination of the foregoing.

The computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

The computer readable program instructions for carrying out operations of the present disclosure may be written in any combination of one or more programming languages, such as, for example, assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the present disclosure. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

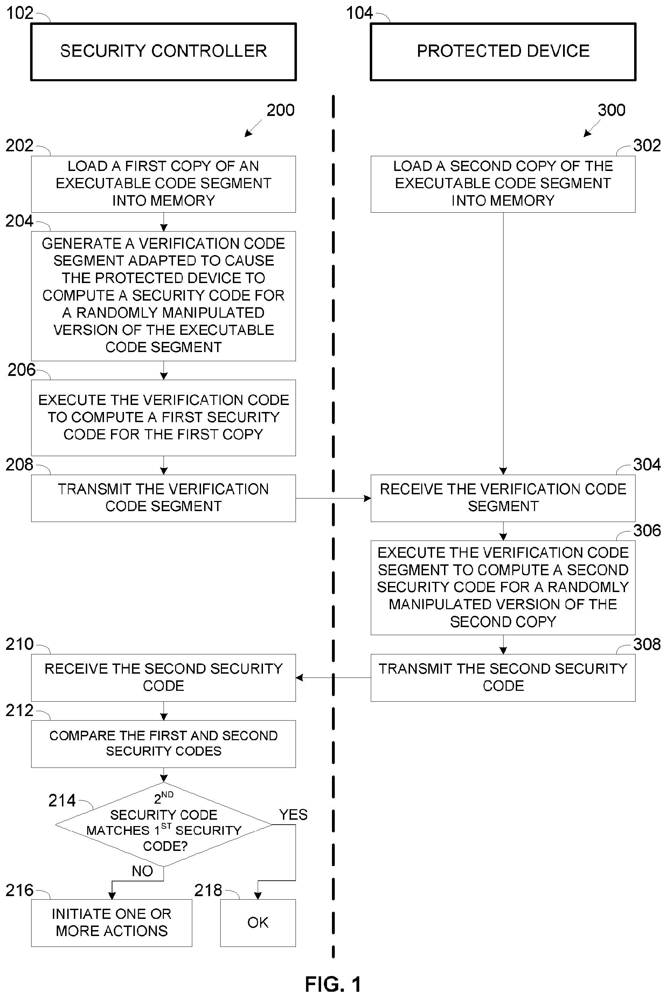

Referring now to the drawings, FIG. 1 presents flow charts of exemplary processes of protecting a processing device by a security controller deployed to verify software code executed by the protected processing device, according to some embodiments of the present disclosure.

Exemplary processes 200 and 300 may be executed by a security controller 102 and a protected device 104, respectively, to protect the protected device 104 from one or more malicious attacks, in particular attacks directed to cause the protected device 104 to execute malicious code in an attempt to compromise the protected device 104. The processes 200 and 300 interact with each other and are described in conjunction with each other according to the operational sequence of the overall verification process combining the processes 200 and 300, in order to provide a clear and complete description of the processes 200 and 300 executed by the security controller 102 and the protected device 104, respectively.

The protected devices 104 may include, for example, IoT devices, sensors, controllers and/or the like having network connectivity and capable of communicating with the security controller 102. The protected devices 104 may typically include relatively low-end devices having limited resources, for example, processing resources, storage resources, communication resources and/or the like. As such, the protected devices 104 may be highly limited and possibly incapable to effectively execute software integrity protection measures such as, for example, anti-malware, anti-virus and/or the like.

The processes 200 and 300 shown in FIG. 1 describe a code verification session conducted by a single security controller 102 for protecting a single protected device 104. However, this should not be construed as limiting, since the processes 200 and 300 may be extended to a plurality of verification sessions initiated by one or more security controllers 102 to protect a plurality of protected devices 104. Moreover, the processes 200 and 300 may be extended to a plurality of verification sessions initiated by one or more security controllers 102 to support protection against malware compromising multiple executable code segments locally executed by one or more protected devices 104. To this end, one or more security controllers 102 may store copies of a plurality of executable code segments typically executed by one or more protected devices 104 where each of these copies is a validated image of a respective executable code segment which is verified to be genuine and untampered.

As shown at 202, the process 200 starts with the security controller 102 loading a first copy of the executable code segment, which is configured for execution by the protected device 104.

The process 200 may be started by the security controller 102 initiating a verification session for verifying a second copy of the executable code segment locally stored at the protected device 104 and executed by the protected device 104, as shown at 302 of the process 300.

In particular, the verification session is launched to verify the code segment of the second copy after being loaded into the (volatile) memory of the protected device 104 at 302 of the process 300. The verification is, therefore, carried out to verify the integrity and reliability of the second copy executed by the protected device 104 and ensure that the second copy is not infected by one or more malicious malware code segments. Such malicious malware may attempt to compromise the protected device 104 by diverting its execution path and cause it to initiate one or more unplanned and/or undesired actions.

The security controller 102 may initiate the verification session periodically, continuously, and/or on demand, i.e. upon a trigger from one or more automated tools and/or operators.

As shown at 204, the security controller 102 generates a verification code segment.

The security controller 102 may configure and/or adapt the verification code segment to cause a security code to be computed for a copy of the executable code segment when loaded in memory, for example, the second copy of the executable code segment loaded in the memory of the protected device 104. Moreover, the verification code segment may be adapted to cause the security code to be computed for the code section of the copy of the executable code segment, since, in case of an infection by one or more malwares, the code section, which is executed by the protected device 104, may typically be the segment, which may contain the malware(s) code.

However, in case the protected device 104 is infected with one or more malware code segments, these malware(s) may be configured to alter the verification code segment to compute the security code for the second copy of the executable code segment such that the second security code computed for the infected second copy equals the security code, which would be computed for the original and uninfected second copy.

In order to increase an immunity of the verification process against the malware code segment(s), which may be executed by the protected device 104, the verification code segment may be configured to cause the security code to be computed for the copy of the executable code segment after applying a random manipulation to the copy of the executable code segment.

Therefore, even if the protected device 104 is infected with malware(s), such malware(s) may be unable to alter the verification code segment to compute the second security code for the second copy in such a way that the second security code computed for the infected second copy matches the security code that would be computed for the manipulated version of the original and uninfected second copy.

The verification code segment may be configured and/or adapted to apply the random manipulation to a plurality of bytes randomly selected in the copy of the executable code segment which is loaded in the (volatile) memory. Specifically, the random manipulation is applied to bytes located at a randomly selected address in the address range occupied by the copy of the executable code segment in the (volatile) memory, in particular the code section of the executable code segment copy.

The random manipulation may be implemented using one or more implementations. For example, a plurality of addresses in the (volatile) memory storing the copy of the executable code segment may be selected and a plurality of bytes located at the randomly selected addresses may be excluded and/or discarded. This implementation has not been claimed as such. According to the claimed disclosure, a plurality of addresses in the (volatile) memory storing the copy of the executable code segment may be selected and a plurality of bytes located at the randomly selected addresses may be altered, for example, replaced with bytes containing a certain value, for example, 0x00, 0xFF, 0x55 and/or the like. Alternatively, according to the claimed disclosure, a plurality of addresses in the (volatile) memory storing the copy of the executable code segment may be selected and a plurality of predefined data bytes may be inserted in the randomly selected addresses, for example, 0x00, 0xFF, 0x55 and/or the like.

The verification code segment may be configured to apply a unique random manipulation for every verification session such that a new verification code segment is generated during each verification session and is valid for only the respective verification session. The unique random manipulation and the single session valid verification code segment may prevent replay attacks by one or more malware(s) potentially residing at the protected device 104 which may attempt to duplicate and/or imitate the random manipulation applied in one or more previous verification sessions.

The verification code segment is, thus, configured and/or adapted to cause the security code to be computed after applying the random manipulation to the target copy of the executable code segment.

The verification code segment may be configured and/or adapted to cause the security code to be computed using one or more methods, techniques and/or algorithms. For example, the verification code segment may cause execution of one or more hash functions to compute a hash value for the manipulated version of the copy of the executable code segment.

Optionally, the verification code segment is encoded to further increase the immunity of the verification process against the malware code segment(s) which may infect the protected device 104, since such malware(s) may need to first decrypt the verification code segment before it could alter the verification code segment and use it to produce the same security code as the original and uninfected second copy, thus disguising the presence of the malware code segment(s) at the protected device 104.

The verification code segment may be encoded using one or more encoding methods, algorithms and/or technologies (collectively designated as encoding algorithms hereinafter), for example, White-Box Cryptography (WBC) and/or the like.

Moreover, the verification code segment may be encoded using one or more encoding algorithms based on one or more operational parameters of the (target) protected device 104. The encoding algorithms may be selected such that, even if the malware(s) residing at the protected device 104 attempt to decrypt the verification code segment in an attempt to alter the verification code segment and produce a valid second security code for the infected second copy, the computing resources (e.g. processing power, storage resources, etc.) available in the protected device 104 may be insufficient for successful and/or efficient decryption.

As shown at 206, the security controller 102 executes the verification code segment in order to apply the random manipulation to a first plurality of bytes in the first copy loaded in the memory and compute a first security code based on the randomly manipulated version of the first copy.

The security controller 102 may store the computed first security code, for example, in the memory.

As shown at 208, the security controller 102 transmits the verification code segment to the protected device 104 via one or more networks.

As shown at 304, the protected device 104 receives the verification code segment from the security controller 102.

As shown at 306, the protected device 104 executes the received verification code segment to compute a second security code based on a randomly manipulated version of the second copy of the executable code segment loaded in the memory of the protected device 104.

The verification code segment executed by the protected device 104 may cause the protected device 104 to compute the second security code after the random manipulation has been applied to a second plurality of bytes in the second copy of the executable code segment 420, which is loaded in the memory of the protected device 104. Since the verification code segment is configured and/or adapted accordingly, the random manipulation applied by the verification code segment to the second plurality of bytes in the second copy is identical to the random manipulation applied to the first plurality of bytes in the first copy before computing the first security code.

It should be emphasized that the verification code segment is configured to cause the protected device 104 to compute the second security code after randomly manipulating the second copy of the executable code segment, specifically manipulating the second plurality of bytes residing at the randomly selected addresses only for the computation of the second security code without applying the random manipulation in the actual memory, where the second copy of the executable code segment is loaded. For example, the second security code may be computed using one or more security code computation functions, for example a hash function, which sequentially traverse the bytes of the second copy loaded in the memory of the protected device 104 and compute the second security code based on the traversed bytes. In such a case, the random manipulation may be applied on the fly during the sequential traversing of the bytes of the second copy rather than by actually manipulating the second copy. As such, the random manipulation, for example, excluding, skipping, inserting, duplicating, altering, and/or the like may be applied to the second plurality of bytes residing at the randomly selected addresses as part of the second security code computation without actually altering the second copy loaded in the memory of the protected device 104. Therefore, the second copy of the executable code segment loaded in the memory of the protected device 104 is not affected in any way by the random manipulation and may be correctly executed by the protected device 104.

As shown at 308, the protected device 104 transmits the second security code to the security controller 102.

Optionally, the protected device 104 may encrypt the second security code using one or more encryption technologies as known in the art.

As shown at 210, the security controller 102 receives the second security code from the protected device 104.

As shown at 212, the security controller 102 compares the second security code received from the protected device 104, which was computed for the manipulated version of the second copy, and the first security code computed for the manipulated version of the first copy.

As shown at 214, which is a conditional step, in case the second security code matches, for example, equals the first security code, the security controller 102 may verify the reliability and integrity of the second copy executed by the protected device 104 and may, thus, determine that the second copy is valid. In such a case, the process 200 may branch to 218. However, in case the second security code does not match the first security code, the security controller 102 may determine that the second copy executed by the protected device 104 may be altered and possibly infected with one or more malware code segments and the protected device 104 is potentially compromised. In such a case, the process 200 may branch to 216.

As shown at 216, in reaction to the absence of a match between the second security code and the first security code, which indicates that the protected device 104 may be potentially compromised, the security controller 102 determines that the protected device 104 may be compromised and may further initiate one or more actions in order to counter the potential compromise of the protected device 104.

The one or more actions initiated by the security controller 102 may include, for example, transmitting an alert message of the potential compromise, transmitting a new copy of the executable code segment to the protected device 104, instructing the protected device 104 to reboot and/or reset, instructing the protected device 104 to disconnect from one or more networks, and/or the like.

Optionally, the security controller 102 may configure, set, and/or initiate one or more timeout timers loaded with a predefined timeout period to define a time frame for the verification session. The security controller 102 may initiate the timeout timer at one or more points of the verification session, for example, when transmitting the verification code segment to the protected device 104 (step 208).

In case the security controller 102 does not receive the second security code from the protected device 104 before expiration of the predefined timeout period, the security controller 102 may determine that the protected device 104 is potentially compromised.

The failure to respond within the predefined time period may be highly indicative of the protected device 104 being compromised and infected with one or more malwares, since, in order to avoid detection, such malware(s) may prevent and/or interfere with the execution of the verification process.

Moreover, the malware(s) may be configured to attempt to discover the nature of the random manipulation and alter the verification code segment to produce a valid second security code for the infected second copy, which equals the second security code computed for the original uninfected second copy. However, in order to unravel the random manipulation, such malware(s) may require significant time and significant computing resources, which may be limited in the protected device 104. The malware(s) may, therefore, fail to correctly alter the second copy in a time period sufficient for responding to the security controller 102 before expiration of the predefined timeout period.

In case the verification code segment is encoded in the verification code segment, such malware(s) may require significantly more time to decode and/or reverse the encoded verification code segment and alter it accordingly to produce a valid second security code, which may further prevent these malware(s) from producing the second security code in a time period sufficient for responding to the security controller 102 before expiration of the predefined timeout period.

As shown at 218, in case of a match between the second security code and the first security code, the security controller 102 may determine that the second copy is valid and free of malicious malware code segment(s). In such a case, the security controller 102 may take no action or, alternatively, initiate one or more actions to indicate that the integrity and reliability of the second copy executed by the protected device 104 is successfully verified, for example, log the verification session, transmit one or more verification success messages and/or the like.

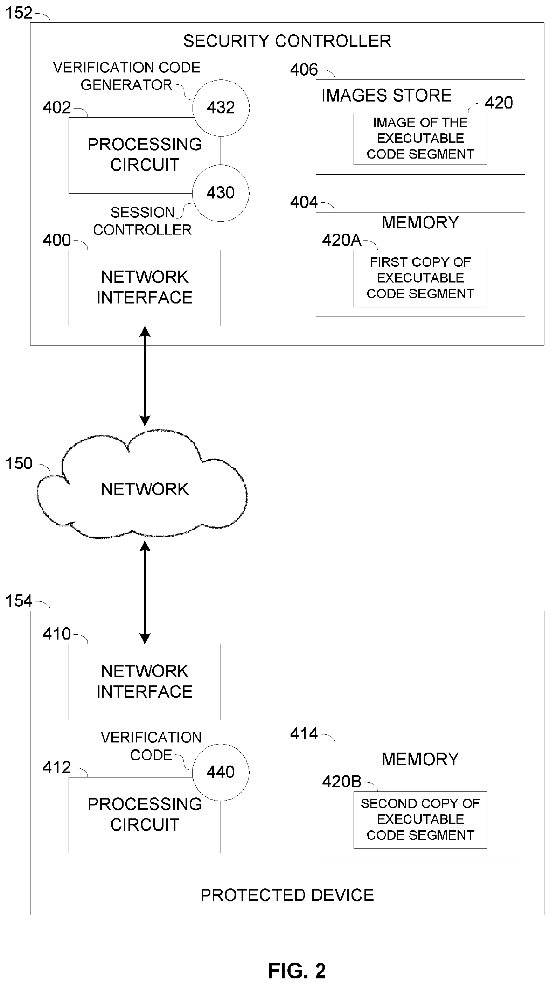

Reference is now made to FIG. 2, which is a schematic illustration of an exemplary system for protecting a processing device by a security controller deployed to verify software code executed by the processing device, according to some embodiments of the present disclosure.

The exemplary system may include one or more security controller(s) 152, such as the security controller 102 shown in FIG. 1, which are deployed to protect one or more protected device(s) 154, such as the protected device 104 shown in FIG. 1, by validating software code executed by the protected device(s) 154.

The security controller 152, for example, a computer, a controller, a server, a computing node, a cluster of computing nodes, and/or the like, may include a network interface 400 for connecting to a network 150, a processing circuit 402 for executing a process such as the process 200 shown in FIG. 1, and a memory 404 for storing data and/or a program. The security controller 152 may further include an images store 406 for storing one or more first copies of one or more executable code segments executed by one or more protected devices 154. Each of the first copies is a validated image of the respective executable code segment as originally created and verified to be untampered.

The network interface 400 may include one or more network interfaces for connecting to the network 150 comprising one or more wired and/or wireless networks, for example, a Local Area Network (LAN), a Wireless LAN (WLAN), a Wide Area Network (WAN), a Municipal Area Network (MAN), a Radio Frequency (RF) network, a cellular network, the internet and/or the like. Via the network interface 400, the security controller 152 may communicate with one or more networked resources connected to the network 150, for example, one or more protected devices 154.

The processing circuit 402 may include one or more homogenous or heterogeneous processors arranged for parallel processing, as clusters, and/or as one or more multi-core processor(s). The processing circuit 402 may, therefore, execute one or more software modules such as, for example, a process, a script, an application, an agent, a utility, a tool and/or the like, each comprising a plurality of program instructions stored in a non-transitory medium (program store) such as the memory 404 and executed by one or more processors available in the processing circuit 402.

The processing circuit 402 may further include one or more hardware elements, for example, a circuit, a component, an Integrated Circuit (IC), an Application Specific Integrated Circuit (ASIC), a Field Programmable Gate Array (FPGA), a Digital Signals Processor (DSP), a cryptography engine and/or the like.

The memory 404 may include one or more non-transitory persistent storage devices, for example, a Read Only Memory (ROM), a Flash array, a hard drive and/or the like. The memory 404 may also include one or more volatile devices, for example, a Random Access Memory (RAM) component, a cache memory and/or the like. The memory 404 may further include one or more network storage resources, for example, a storage server, a network accessible storage (NAS), a network drive, a cloud storage and/or the like accessible via the network interface 400.

The images store 406 may include one or more persistent memory resources for storing one or more local images (copies) of the executable software code executed by one or more protected device 154. For example, an image of an executable code segment 420 executed by the protected device 154 may be stored in the images store 406.

The images store 406 may further include a secure storage protected via hardware and/or software means to prevent unauthorized access and, thus, ensure a reliability and integrity of the stored images. Such secure storage may include, for example, a Trusted Platform Module (TPM), an Enclave and/or the like which may be password protected and/or accessed using secure protocol(s).

Optionally, the images store 406 is utilized by one or more attachable storage devices, for example, an attachable memory device (e.g. memory stick) and/or the like, which may be attached to the network interface 400 and/or to one or more Input/Output (I/O) interfaces supported by the security controller 152.

One or more images stored in the images store 406, for example, a first copy 420A of the executable code segment 420, may be loaded into the memory 404, for example, into the volatile memory available in the memory 404.

The processing circuit 402 may execute one or more functional modules which may be implemented via one or more software modules, one or more hardware elements and/or a combination thereof. For example, the processing circuit 402 may apply a session controller 430 functional module for executing the process 100 shown in FIG. 1 and a verification code generator 432 functional module for generating a verification code segment 440 used to verify one or more code segments executed by the protected device 154.

Optionally, the security controller 152 executing the session controller 430 and the verification code generator 432 is implemented as one or more cloud computing services, for example, an Infrastructure as a Service (IaaS), a Platform as a Service (PaaS), a Software as a Service (SaaS), and/or the like.

The protected device 154, for example, an IoT device, a sensor, a controller and/or the like, may include a network interface 410, such as the network interface 400, for connecting to a network 150, a processing circuit 412, such as the processing circuit 402, for executing the process 300 and a storage 414 for storing data and/or a program.

The network interface 410 may include one or more network interfaces, typically wireless interfaces, such as, for example, a WLAN interface, an RF interface, a cellular interface, and/or the like, for connecting to the network 150. Via the network interface 410, the protected device 154 may communicate with one or more networked resources connected to the network 150, for example, with the security controller 152.

The memory 414 may include one or more non-transitory persistent storage devices, for example, a Read Only Memory (ROM), a Flash array, a hard drive and/or the like. The memory 414 may also include one or more volatile devices, for example, a RAM component, a cache memory and/or the like.

As described for the processing circuit 402, the processing circuit 412 may also execute one or more functional modules, which may be implemented via one or more software modules, one or more hardware elements, and/or a combination thereof.

For example, one or more copies of one or more executable code segments which may be stored in the memory 414, typically in persistent (non-volatile) memory, may be loaded and stored in one or more volatile memory devices of the memory 414. For example, a second copy 420B of the executable code segment 420 may be loaded and (temporarily) stored in the memory 414 for execution by the processing circuit 412.

The session controller 430 may initiate one or more verification sessions for verifying that the second copy 420B locally stored in the memory 414 of the protected device 154 and executed by the processing circuit 412 of the protected device 154 is not infected by one or more malicious malware code segments. The session controller 430 may initiate the verification sessions periodically, continuously, and/or on demand, i.e. upon a trigger from one or more automated tools and/or operators.

The session controller 430 may start the verification session by loading the first copy 420A of the executable code segment 420, which is configured for execution by the protected device 154. The session controller 430 may load the first copy 420A from the images store 406 to the memory 404, specifically to the volatile memory of the memory 404. The session controller 430 may be configured to load the first copy 420A to the memory 404. However, the session controller 430 may be configured to instruct, invoke, and/or use one or more loader agents, tools, and/or applications executed by the processing circuit 402 to load the first copy 420A to the memory 404.

The session controller 430 may further initiate, invoke, and/or execute the verification code generator 432 to generate the verification code segment 440.

The verification code generator 432 may configure and/or adapt the verification code segment 440 to cause a security code to be computed for a copy of the executable code segment 420 when loaded in memory, in particular in volatile memory, for example, the first copy 420A of the executable code segment 420 loaded in the memory 404 of the security controller 152, and/or the second copy 420B of the executable code segment 420 loaded in the memory 414 of the protected device 154. Moreover, the verification code segment 440 may be adapted to cause the security code to be computed for the code section (code segment) of the executable code segment copy, since, in case of infection by one or more malwares, the code section which is executed by the processing circuit 412 may typically be the segment which may contain the malware(s) code.

However, in case the protected device 154 is infected with one or more malware code segments, these malware(s) may be configured to alter the second copy 420B such that the security code computed for the infected second copy 420B equals the security code, which would be computed for the original and uninfected second copy 420B.

In order to increase an immunity of the verification process against the malware code segment(s), which may be executed by the protected device 154, the verification code generator 432 may configure and/or adapt the verification code segment 440 to cause the security code to be computed for the copy of the executable code segment 420 after applying a random manipulation to the copy of the executable code segment 420.

Therefore, even if the protected device 154 is infected with malware(s), such malware(s) may be unable to alter the verification code segment 440 in such a way that the security code computed for the infected second copy 420B matches the security code that would be computed for the manipulated version of the original and uninfected second copy 420B.

The verification code generator 432 may configure and/or adapt the verification code segment 440 to apply the random manipulation to a plurality of bytes randomly selected in the copy of the executable code segment 420, which is loaded in the volatile memory. Specifically, the random manipulation is applied to bytes located at randomly selected address in the address range occupied by the copy of the executable code segment 420 in the volatile memory, in particular the code section of the executable code segment copy.

The random manipulation may be implemented using one or more implementations. For example, the verification code segment 440 may be configured to randomly select a plurality of addresses in the volatile memory storing the copy of the executable code segment 420 and exclude (discard) the bytes located at the randomly selected addresses. This implementation has not been claimed as such. According to the claimed disclosure, the verification code segment 440 may be configured to cause random selection of a plurality of addresses in the volatile memory storing the copy of the executable code segment 420 and alter the bytes at these addresses, for example, replace the data of the bytes with a certain value, for example, 0x00, 0xFF, 0x55 and/or the like. Alternatively, according to the claimed disclosure, the verification code segment 440 may be configured to randomly select a plurality of addresses in the volatile memory storing the copy of the executable code segment 420 and insert predefined data bytes in these randomly selected addresses, for example, 0x00, 0xFF, 0x55 and/or the like.

The verification code generator 432 may configure and/or adapt the verification code segment 440 to apply a unique random manipulation for every verification session such that a new verification code segment 440 generated during each verification session is valid for only the respective verification session. The unique random manipulation and the single session valid verification code segment 440 may prevent replay attacks by one or more of the malware(s) potentially residing at the protected device 154 which may attempt to duplicate and/or imitate the random manipulation applied in one or more previous verification sessions.

The verification code segment 440 is, thus, configured and/or adapted to cause the security code to be computed after applying the random manipulation to the target copy of the executable code segment 420.

The verification code segment 440 may be configured and/or adapted to cause the security code to be computed using one or more methods, techniques, and/or algorithms. For example, the verification code segment 440 may cause execution of one or more hash functions, which may cause a hash value to be computed for the manipulated version of the copy of the executable code segment 420.

Optionally, the processing circuitry 402 executing the verification code generator 432 may encode the verification code segment 440. This may further increase an immunity of the verification process against the malware code segment(s) which may infect the protected device 154, since such malware(s) may need to first decrypt the verification code segment 440 before it could alter the verification code segment 440 to produce the same security code as the security code computed for the original and uninfected second copy 420B.

The verification code segment 440 may be encoded using one or more encoding methods, algorithms, and/or technologies, for example, White-Box Cryptography (WBC), and/or the like.

Moreover, the verification code segment 440 may be encoded using one or more of the encoding algorithms based on one or more operational parameters of the (target) protected device 154. The encoding algorithms may be selected such that, even if the malware(s) residing at the protected device 154 attempt(s) to decrypt the randomly selected addresses in an attempt to alter the infected second copy 420B to produce a valid security code, the computing resources (e.g. processing power, storage resources, etc.) available in the protected device 154 may be insufficient for successful and/or efficient decryption.

The session controller 430 may cause the processing circuit 402 to execute the verification code segment 440 generated by the verification code generator 432, in order to apply the random manipulation to a first plurality of bytes in the first copy 420A loaded in the memory 404 and compute a first security code based on the randomly manipulated version of the first copy 420A.

The session controller 430 may store the computed first security code, for example, in the memory 404.

Optionally, the session controller 430 may cause the processing circuit 402 to apply the random manipulation to the first copy 420A loaded in the memory 404 and compute the first security code for the manipulated version of the first copy 420. The session controller 430 may then cause the cause the processing circuit 402 to initiate the verification code generator 432 to generate the verification code segment 440 adapted to cause an identical random manipulation as applied to the first copy 420A by the processing circuit 402 executing the session controller 430 and compute the security code for the manipulated version of the copy of the executable code segment 420.

The session controller 430 may transmit the verification code segment 440 to the protected device 154 via the network 150.

The protected device 154, specifically the processing circuit 412, may execute the verification code segment 440 received from the security controller 152 to compute a second security code based on a randomly manipulated version of the second copy 420B of the executable cod segment.

The verification code segment 440 may cause the processing circuit 412 to first apply the random manipulation to a second plurality of bytes in the second copy 420B of the executable code segment 420, which is loaded in the memory 414 and potentially executed by the processing circuit 412. Since the verification code segment 440 is configured and/or adapted accordingly, the random manipulation applied by the processing circuit 412 executing the verification code segment 440 to the second plurality of bytes in the second copy 420B is similar (identical) to the random manipulation applied to the first plurality of bytes in the first copy 420A before computing the first security code.

The processing circuit 412 may apply the verification code segment 440 to compute the second security code for the manipulated version of the second copy 420B in the same manner applied to compute the first security code for the manipulated version of the first copy 420A.

It should be emphasized that the verification code segment 440 may cause the processing circuit 412 to compute the second security code after randomly manipulating the second copy 420B, specifically manipulating the second plurality of bytes residing at the randomly selected addresses only for the computation of the second security code without actually applying the manipulation in the memory 414, where the second copy 420B is loaded. For example, the second security code may be computed using one or more security code computation functions, for example a hash function, which sequentially traverse the bytes of the second copy 420B loaded in the memory 414 and compute the second security code based on the traversed bytes. In such a case, the random manipulation may be applied on the fly during the sequential traversing of the bytes of the second copy 420B rather than by actually manipulating the second copy 420B. As such, the random manipulation, for example, excluding, skipping, inserting, duplicating, altering, and/or the like may be applied to the second plurality of bytes residing at the randomly selected addresses of the second copy 420B as part of the security code computation without actually altering the second copy 420B loaded in the memory 414. Therefore, the second copy 420B loaded in the memory 414 is not affected by the random manipulation in any way and may be correctly executed by the processing circuit 412.

The protected device 154 may transmit the second security code to the security controller 152.

Optionally, the protected device 154 may encrypt the second security code using one or more encryption technologies as known in the art.

The security controller 152, specifically the processing circuitry 402 executing the session controller 430, may receive the second security code from the protected device 154.

The session controller 430 may cause the processing circuitry 402 to compare the second security code received from the protected device 154, which was computed for the manipulated version of the second copy 420B, and the first security code computed for the manipulated version of the first copy 420A with each other.

In case the second security code matches, for example, equals, the first security code, the session controller 430 may cause the processing circuitry 402 to verify the reliability and integrity of the second copy 420B executed by the protected device 154 and may, thus, determine that the second copy 420B is valid. However, in case the second security code does not match the first security code, the session controller 430 may cause the processing circuitry 402 to determine that the second copy 420B executed by the protected device 154 may be altered and possibly infected with one or more malware code segments and the protected device 154 is potentially compromised.

In reaction to the absence of a match between the second security code and the first security code, thereby indicating that the protected device 154 may be potentially compromised, the session controller 430 may cause the processing circuitry 402 to further initiate one or more actions in order to counter the potential compromise of the protected device 154. The actions initiated by the processing circuitry 402 executing the session controller 430 may include, for example, transmitting an alert message of the potential compromise, transmitting a new copy of the executable code segment 420 to the protected device 154, instructing the protected device 154 to reboot and/or reset, instructing the protected device 154 to disconnect from the network 150, and/or the like.

Optionally, the session controller 430 may cause the processing circuitry 402 to configure, set, and/or initiate one or more timeout timers loaded with a predefined timeout period to define a time frame for the verification session. The session controller 430 may cause the processing circuitry 402 to initiate the timeout timer at one or more points of the verification session, for example, when transmitting the verification code segment 440 to the protected device 154.

In case the processing circuitry 402 executing the session controller 430 does not receive the second security code from the protected device 154 before expiration of the predefined timeout period, the session controller 430 may cause the processing circuitry 402 to determine that the protected device 154 is potentially compromised.

In case of a match between the second security code and the first security code, the session controller 430 may cause the processing circuitry 402 to determine that the second copy 420B may be valid and free of malicious malware code segment(s). In such a case, the session controller 430 may cause the processing circuitry 402 to take no action or alternatively initiate one or more actions to indicate that the integrity and reliability of the second copy 420 executed by the protected device 154 is successfully verified, for example, log the verification session, transmit one or more verification success messages and/or the like.

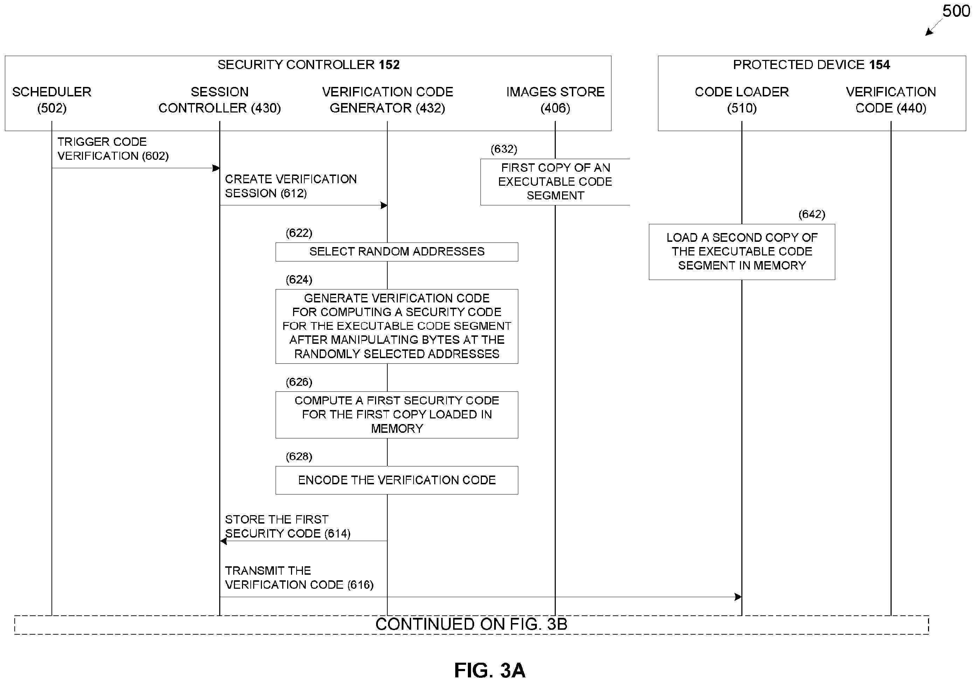

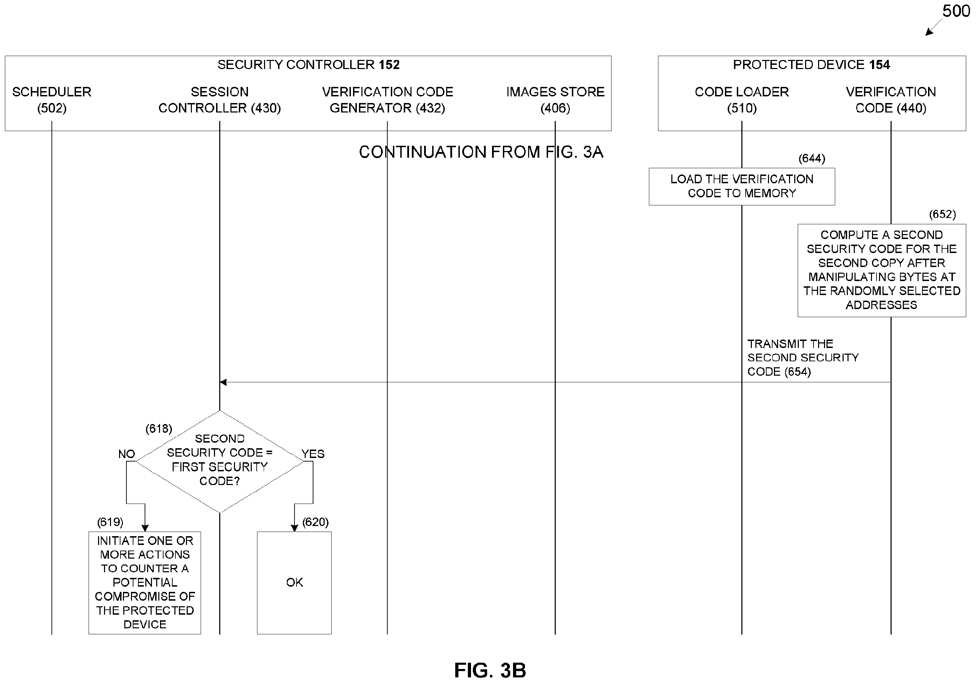

Reference is now made to FIG. 3A and FIG. 3B, which present an exemplary sequence of protecting a processing device by a security controller deployed to verify software code executed by the protected processing device, according to some embodiments of the present disclosure. An exemplary code verification sequence 500 may be executed by a security controller, such as the security controller 152 shown in FIG. 2, and a protected device, such as the protected device 154 shown in FIG. 2, to verify an integrity and reliability of one or more copies of executable code segments, such as the second copy 420B of the executable code segment 420 executed by the protected device 154.

The security controller 152, specifically the processing circuit 402, may execute one or more functional modules implemented and/or utilized via one or more software modules, one or more hardware elements, and/or a combination thereof. For example, the processing circuit 402 may execute a scheduler 502 for scheduling one or more verification sessions for verifying the second copy 420B of the executable code segment 420 executed by the protected device 154, a session controller, such as the session controller 430, and a verification code generator, such as the verification code generator 432.

The protected device 154, specifically the processing circuit 412, may also execute one or more functional modules implemented and/or utilized via one or more software modules, one or more hardware elements, and/or a combination thereof. For example, the processing circuit 412 may execute a code loader 510 for loading one or more code segments in a memory of the protected device 154, such as the memory 414, and a verification code segment, such as the verification code segment 440 generated by the verification code generator 432.

The verification sequence 500 starts with the scheduler 502 triggering, at 602, the session controller 430, which causes the processing circuitry 402 to initiate a code verification session. The scheduler 502 triggers one or more verification session(s) periodically, continuously, and/or in response to one or more requests received from one or more automated tasks, via one or more initiation messages received at the security controller 152, and/or in response to manual triggering by one or more operators.

In response to the trigger 602, the session controller 430 causes the processing circuitry 402 to initiate the code verification session at 612. The session controller 430 causes the processing circuitry 402 to first load into a memory, such as the memory 404, a first copy of the executable code segment stored, as shown at 632, in an images cache, such as the images store 406. The first copy is a validated image of the executable code segment, which is verified as being genuine and untampered.

The session controller 430 further causes the processing circuitry 402 to perform the following steps.

A plurality of addresses is randomly selected, as shown at 622, in an address range of the memory 404, in which the first copy of the executable code segment is loaded. According to an example, this is carried out as described in step 202 of the process 200. The verification code segment 440 is then generated for computing a security code for the executable code segment after manipulating the first plurality of bytes at the randomly selected addresses, as shown at 624. According to an example, this is performed as described in step 204 of the process 200. The generated verification code segment 440 is executed to compute the first security code, as shown at 626, for the first copy loaded in memory. According to an example, this is carried out as described in step 206 of the process 200. Optionally, the verification code segment 440 may be encoded, as shown at 628.

As described herein before, the verification code segment 440 is configured to cause the processing circuitry 402 to apply one or more methods, techniques, and/or algorithms for computing the security code. For example, the verification code segment 440 causes the processing circuitry 402 to apply one or more hash functions to compute a first hash value for the first copy, which may be used as the first security code for the first copy.

The session controller 430 causes the processing circuitry 402 to receive the computed first security code, for example, the first hash value, and store it, as shown at 614. According to an example, this is performed as described in step 206 of the process 200.

The session controller 430 causes the processing circuitry 402 to transmit the verification code segment 440 to the protected device 154, as shown at 616. According to an example, this is carried out as described in step 208 of the process 200.

The protected device 154 receives the verification code segment 440 from the security controller 152. According to an example, this is performed as described in step 304 of the process 300. After receiving the verification code segment 440 from the security controller 152, the protected device 154, specifically the processing circuit 412, may initiate the code loader 510 to load, as shown at 644 in FIG. 3B, the verification code segment 440 into a memory for execution by the processing circuit 412. In case the verification code segment 440 was encoded by the processing circuitry 402 of the security controller 152, the processing circuit 412 may first decode and/or reverse the encoded verification code segment 440 and then load the verification code segment 440 into the memory.

Once loaded, the processing circuit 412 executes the verification code segment 440 to compute a second security code, as shown at 652, for example, a second hash value, for the second copy loaded in the memory of the protected device 154 after manipulating the second plurality of bytes residing at the randomly selected address. According to an example, this is performed as described in step 306 of the process 300.

The protected device 154 transmits the second security code, for example, the second hash value, as shown at 654, to the security controller 152. According to an example, this is carried out as described in step 308 of the process 300.

After receiving the second security code, for example, the second hash value, from the protected device 154, the session controller 430 causes the processing circuit 402 to compare, as shown at 618, the second security code, for example, the second hash value, computed for the second copy, and the first security code, for example, the first hash value, computed for the first copy with each other. According to an example, this is performed as described in step 214 of the process 200.

In case of a match between the second security code, for example, the second hash value, and the first security code, for example, the first hash value, as shown at 620, the session controller 430 causes the processing circuit 402 to determine that the second copy is valid and uninfected (OK) by malware code segment(s). According to an example, this is performed as described in step 218 of the process 200.

However, in reaction to an absence of a match between the second security code, for example, the second hash value, and the first security code, for example, the first hash value, as shown at 619, the session controller 430 causes the processing circuit 402 to determine that the protected device 154 may be compromised and further causes the processing circuit 402 to initiate one or more actions to counter the potentially compromise of the protected device 154. According to an example, this is carried out as described in step 216 of the process 200.

The word "exemplary" is used herein to mean "serving as an example, an instance or an illustration". Any implementationdescribed as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular implementationof the disclosure may include a plurality of "optional" features unless such features conflict.

The scope of protection is defined by the appended claims.

## Claims

1. A security controller (152), comprising:
a memory (404); and
circuitry (402) configured to:
load a first copy of an executable code segment to the memory,
compute a first security code based on a randomly manipulated first copy of the executable code segment,
generate a verification code segment adapted to cause a protected device to compute a second security code based on a randomly manipulated second copy of the executable code segment upon the second copy of the executable code segment being loaded in a memory of the protected device,
transmit the verification code segment to the protected device,
receive the second security code from the protected device,
compare the first security code and the second security code, and
determine a compromise of the protected device in reaction to the second security code not matching the first security code;
**characterized in that**
the random manipulation comprises randomly selecting an address of a first plurality of bytes in the first copy of the executable code segment and altering, for the computation of the first security code, the first plurality of bytes residing at the randomly selected address in the first copy of the executable code segment; or
wherein the random manipulation comprises randomly selecting an address of a first plurality of bytes in the first copy of the executable code segment and inserting, for the computation of the first security code, a plurality of predefined data bytes at the randomly selected address into the first copy of the executable code segment.;
wherein the generated verification code segment is adapted such that the random manipulation applied by the verification code segment to the second plurality of bytes in the second copy is identical to the random manipulation applied to the first plurality of bytes in the first copy before computing the first security code.

2. The security controller of claim 1, wherein the circuitry is further configured to compute a hash value based on the first copy of the executable code segment using at least one hash function, and wherein the first security code comprises the hash value

3. The security controller of claim 1 or 2, wherein the circuitry is further configured to encode the verification code segment.

4. The security controller of claim 3, wherein the circuitry is further configured to apply white-box cryptography to encode the verification code segment.

5. The security controller of any one of the preceding claims, wherein the circuitry is further configured to perform a verification session to verify the executable code segment, and wherein the random manipulation is unique for the verification session, such that the verification code segment generated during the verification session is valid only for the verification session.

6. The security controller of any one of the preceding claims, wherein the circuitry is further configured to initiate an action in reaction to the second security code not being received from the protected device before expiration of a predefined timeout period.

7. The security controller of claim 6, wherein the initiated action comprises at least one of transmitting an alert message of the compromise, transmitting a new copy of the executable code segment to the protected device, instructing the protected device to reboot, and instructing the protected device to disconnect from at least one network.

8. A computer-implemented method of detecting a potentially compromised protected device, comprising:
loading (202) a first copy of an executable code segment to a memory of a security controller;
computing (206) a first security code based on a randomly manipulated first copy of the executable code segment;
generating (204) a verification code segment adapted to cause a protected device to compute a second security code based on a randomly manipulated second copy of the executable code segment upon the second copy of the executable code segment being loaded in a memory of the protected device;
transmitting (208) the verification code segment to the protected device;
receiving (210) the second security code from the protected device;
comparing (212) the first security code and the second security code; and
determining (214, 216) a compromise of the protected device in reaction to the second security code not matching the first security code;
**characterized in that**
the random manipulation comprises randomly selecting an address of a first plurality of bytes in the first copy of the executable code segment and altering, for the computation of the first security code, the first plurality of bytes residing at the randomly selected address in the first copy of the executable code segment; or
wherein the random manipulation comprises randomly selecting an address of a first plurality of bytes in the first copy of the executable code segment and inserting, for the computation of the first security code, a plurality of predefined data bytes at the randomly selected address into the first copy of the executable code segment;
wherein the generated verification code segment is adapted such that the random manipulation applied by the verification code segment to the second plurality of bytes in the second copy is identical to the random manipulation applied to the first plurality of bytes in the first copy before computing the first security code.

9. A protected device (154), comprising:
a memory (414); and
circuitry (412) configured to:
load a second copy of an executable code segment to the memory, receive a verification code segment from a security controller, the verification code segment being adapted to cause the protected device to compute a second security code based on
a randomly manipulated second copy of the executable code segment execute the verification code segment, compute the second security code based on the randomly manipulated second copy of the
executable code segment, and transmit the second security code to the security controller;
**characterized in that**
the random manipulation comprises randomly selecting an address of a first plurality of bytes in the second copy of the executable code segment and altering, for the computation of the second security code, the first plurality of bytes residing at the randomly selected address in the second copy of the executable code segment; or
wherein the random manipulation comprises randomly selecting an address of a first plurality of bytes in the second copy of the executable code segment and inserting, for the computation of the second security code, a plurality of predefined data bytes at the randomly selected address into the second copy of the executable code segment;
wherein the generated verification code segment is adapted such that the random manipulation applied by the verification code segment to the first plurality of bytes in the second copy is identical to a random manipulation applied by the security controller to a first plurality of bytes in a first copy of the executable code used for computing a first security code.

10. The protected device of claim 9, wherein the circuitry is further configured to compute a hash value based on the copy of the executable code segment using at least one hash function, and wherein the security code comprises the hash value.

11. A computer-implemented method of detecting a compromise at a protected device, the method comprising:
loading (302) a second copy of an executable code segment to a memory of the protected device;
receiving (304) a verification code segment from a security controller, the verification code segment being adapted to cause the protected device to compute a second security code based on a randomly manipulated second copy of the executable code segment;
executing (306) the verification code segment;
computing the second security code based on the randomly manipulated second copy of the executable code segment; and
transmitting (308) the second security code to the security controller;
**characterized in that**
the random manipulation comprises randomly selecting an address of a first plurality of bytes in the second copy of the executable code segment and altering, for the computation of the second security code, the first plurality of bytes residing at the randomly selected address in the second copy of the executable code segment; or
wherein the random manipulation comprises randomly selecting an address of a first plurality of bytes in the second copy of the executable code segment and inserting, for the computation of the second security code, a plurality of predefined data bytes at the randomly selected address into the second copy of the executable code segment;
wherein the generated verification code segment is adapted such that the random manipulation applied by the verification code segment to the first plurality of bytes in the second copy is identical to a random manipulation applied by the security controller to a first plurality of bytes in a first copy of the executable code used for computing a first security code.

12. A computer readable medium comprising instructions executable by a computer, which, when executed by the computer, cause the computer to perform a method according to claim 8 or 11.

## Patentansprüche

1. Sicherheitssteuerung (152), umfassend:
einen Speicher (404); und
eine Schaltung (402), die zu Folgendem konfiguriert ist:
Laden einer ersten Kopie eines ausführbaren Codesegments in den Speicher,
Berechnen eines ersten Sicherheitscodes basierend auf einer zufällig manipulierten ersten Kopie des ausführbaren Codesegments,
Generieren eines Verifizierungscodesegments, das dazu ausgelegt ist, zu veranlassen, dass eine geschützte Vorrichtung einen zweiten Sicherheitscode basierend auf einer zufällig manipulierten zweiten Kopie des ausführbaren Codesegments berechnet, nachdem die zweite Kopie des ausführbaren Codesegments in einen Speicher der geschützten Vorrichtung geladen wurde,
Übertragen des Verifizierungscodesegments an die geschützte Vorrichtung,
Empfangen des zweiten Sicherheitscodes von der geschützten Vorrichtung,
Vergleichen des ersten Sicherheitscodes und des zweiten Sicherheitscodes und
Bestimmen einer Gefährdung der geschützten Vorrichtung als Reaktion darauf, dass der zweite Sicherheitscode nicht mit dem ersten Sicherheitscode übereinstimmt;
**dadurch gekennzeichnet, dass**
die zufällige Manipulation zufälliges Auswählen einer Adresse einer ersten Vielzahl von Bytes in der ersten Kopie des ausführbaren Codesegments und Verändern, für die Berechnung des ersten Sicherheitscodes, der ersten Vielzahl von Bytes, die sich an der zufällig ausgewählten Adresse in der ersten Kopie des ausführbaren Codesegments befinden, umfasst; oder
wobei die zufällige Manipulation zufälliges Auswählen einer Adresse einer ersten Vielzahl von Bytes in der ersten Kopie des ausführbaren Codesegments und Einfügen, für die Berechnung des ersten Sicherheitscodes, einer Vielzahl von vordefinierten Datenbytes an der zufällig ausgewählten Adresse in die erste Kopie des ausführbaren Codesegments umfasst;
wobei das generierte Verifizierungscodesegment derart ausgelegt ist, dass die zufällige Manipulation, die durch das Verifizierungscodesegment auf die zweite Vielzahl von Bytes in der zweiten Kopie angewendet wird, identisch ist mit der zufälligen Manipulation, die auf die erste Vielzahl von Bytes in der ersten Kopie vor dem Berechnen des ersten Sicherheitscodes angewendet wird.

2. Sicherheitssteuerung nach Anspruch 1, wobei die Schaltung ferner dazu konfiguriert ist, basierend auf der ersten Kopie des ausführbaren Codesegments unter Verwendung mindestens einer Hash-Funktion einen Hash-Wert zu berechnen, und wobei der erste Sicherheitscode den Hash-Wert umfasst.

3. Sicherheitssteuerung nach Anspruch 1 oder 2, wobei die Schaltung ferner dazu konfiguriert ist, das Verifizierungscodesegment zu codieren.

4. Sicherheitssteuerung nach Anspruch 3, wobei die Schaltung ferner dazu konfiguriert ist, White-Box-Kryptografie anzuwenden, um das Verifizierungscodesegment zu codieren.

5. Sicherheitssteuerung nach einem der vorhergehenden Ansprüche, wobei die Schaltung ferner dazu konfiguriert ist, eine Verifizierungssitzung durchzuführen, um das ausführbare Codesegment zu verifizieren, und wobei die zufällige Manipulation für die Verifizierungssitzung derart eindeutig ist, dass das während der Verifizierungssitzung generierte Verifizierungscodesegment nur für die Verifizierungssitzung gültig ist.

6. Sicherheitssteuerung nach einem der vorhergehenden Ansprüche, wobei die Schaltung ferner dazu konfiguriert ist, als Reaktion darauf, dass der zweite Sicherheitscode nicht vor Ablauf einer vordefinierten Zeitüberschreitung von der geschützten Vorrichtung empfangen wird, eine Handlung einzuleiten.

7. Sicherheitssteuerung nach Anspruch 6, wobei die eingeleitete Handlung mindestens eines von Übertragen einer Warnnachricht über die Gefährdung, Übertragen einer neuen Kopie des ausführbaren Codesegments an die geschützte Vorrichtung, Anweisen der geschützten Vorrichtung zum Neustart und Anweisen der geschützten Vorrichtung zum Trennen der Verbindung zu mindestens einem Netzwerk umfasst.

8. Computerimplementiertes Verfahren zum Detektieren einer potenziell gefährdeten geschützten Vorrichtung, umfassend:
Laden (202) einer ersten Kopie eines ausführbaren Codesegments in einen Speicher einer Sicherheitssteuerung;
Berechnen (206) eines ersten Sicherheitscodes basierend auf einer zufällig manipulierten ersten Kopie des ausführbaren Codesegments;
Generieren (204) eines Verifizierungscodesegments, das dazu ausgelegt ist, zu veranlassen, dass eine geschützte Vorrichtung einen zweiten Sicherheitscode basierend auf einer zufällig manipulierten zweiten Kopie des ausführbaren Codesegments berechnet, nachdem die zweite Kopie des ausführbaren Codesegments in einen Speicher der geschützten Vorrichtung geladen wurde;
Übertragen (208) des Verifizierungscodesegments an die geschützte Vorrichtung;
Empfangen (210) des zweiten Sicherheitscodes von der geschützten Vorrichtung;
Vergleichen (212) des ersten Sicherheitscodes und des zweiten Sicherheitscodes; und
Bestimmen (214, 216) einer Gefährdung der geschützten Vorrichtung als Reaktion darauf, dass der zweite Sicherheitscode nicht mit dem ersten Sicherheitscode übereinstimmt;
**dadurch gekennzeichnet, dass**
die zufällige Manipulation zufälliges Auswählen einer Adresse einer ersten Vielzahl von Bytes in der ersten Kopie des ausführbaren Codesegments und Verändern, für die Berechnung des ersten Sicherheitscodes, der ersten Vielzahl von Bytes, die sich an der zufällig ausgewählten Adresse in der ersten Kopie des ausführbaren Codesegments befinden, umfasst; oder
wobei die zufällige Manipulation zufälliges Auswählen einer Adresse einer ersten Vielzahl von Bytes in der ersten Kopie des ausführbaren Codesegments und Einfügen, für die Berechnung des ersten Sicherheitscodes, einer Vielzahl von vordefinierten Datenbytes an der zufällig ausgewählten Adresse in die erste Kopie des ausführbaren Codesegments umfasst;
wobei das generierte Verifizierungscodesegment derart ausgelegt ist, dass die zufällige Manipulation, die durch das Verifizierungscodesegment auf die zweite Vielzahl von Bytes in der zweiten Kopie angewendet wird, identisch ist mit der zufälligen Manipulation, die auf die erste Vielzahl von Bytes in der ersten Kopie vor dem Berechnen des ersten Sicherheitscodes angewendet wird.

9. Geschützte Vorrichtung (154), umfassend:
einen Speicher (414); und
eine Schaltung (412), die zu Folgendem konfiguriert ist:
Laden einer zweiten Kopie eines ausführbaren Codesegments in den Speicher,
Empfangen eines Verifizierungscodesegments von einer Sicherheitssteuerung, wobei das Verifizierungscodesegment dazu ausgelegt ist, zu veranlassen, dass die geschützte Vorrichtung einen zweiten Sicherheitscode basierend auf einer zufällig manipulierten zweiten Kopie des ausführbaren Codesegments berechnet,
Ausführen des Verifizierungscodesegments,
Berechnen des zweiten Sicherheitscodes basierend auf der zufällig manipulierten zweiten Kopie des ausführbaren Codesegments und Übertragen des zweiten Sicherheitscodes an die Sicherheitssteuerung;
**dadurch gekennzeichnet, dass**
die zufällige Manipulation zufälliges Auswählen einer Adresse einer ersten Vielzahl von Bytes in der zweiten Kopie des ausführbaren Codesegments und Verändern, für die Berechnung des zweiten Sicherheitscodes, der ersten Vielzahl von Bytes, die sich an der zufällig ausgewählten Adresse in der zweiten Kopie des ausführbaren Codesegments befinden, umfasst; oder
wobei die zufällige Manipulation zufälliges Auswählen einer Adresse einer ersten Vielzahl von Bytes in der zweiten Kopie des ausführbaren Codesegments und Einfügen, für die Berechnung des zweiten Sicherheitscodes, einer Vielzahl von vordefinierten Datenbytes an der zufällig ausgewählten Adresse in die zweite Kopie des ausführbaren Codesegments umfasst;
wobei das generierte Verifizierungscodesegment derart ausgelegt ist, dass die zufällige Manipulation, die durch das Verifizierungscodesegment auf die erste Vielzahl von Bytes in der zweiten Kopie angewendet wird, identisch ist mit einer zufälligen Manipulation, die durch die Sicherheitssteuerung auf eine erste Vielzahl von Bytes in einer ersten Kopie des ausführbaren Codes, der zum Berechnen des ersten Sicherheitscodes verwendet wird, angewendet wird.

10. Geschützte Vorrichtung nach Anspruch 9, wobei die Schaltung ferner dazu konfiguriert ist, basierend auf der Kopie des ausführbaren Codesegments unter Verwendung mindestens einer Hash-Funktion einen Hash-Wert zu berechnen, und wobei der Sicherheitscode den Hash-Wert umfasst.

11. Computerimplementiertes Verfahren zum Detektieren einer Gefährdung einer geschützten Vorrichtung, wobei das Verfahren Folgendes umfasst:
Laden (302) einer zweiten Kopie eines ausführbaren Codesegments in einen Speicher der geschützten Vorrichtung;
Empfangen (304) eines Verifizierungscodesegments von einer Sicherheitssteuerung, wobei das Verifizierungscodesegment dazu ausgelegt ist, zu veranlassen, dass die geschützte Vorrichtung einen zweiten Sicherheitscode basierend auf einer zufällig manipulierten zweiten Kopie des ausführbaren Codesegments berechnet;
Ausführen (306) des Verifizierungscodesegments;
Berechnen des zweiten Sicherheitscodes basierend auf der zufällig manipulierten zweiten Kopie des ausführbaren Codesegments; und
Übertragen (308) des zweiten Sicherheitscodes an die Sicherheitssteuerung;
**dadurch gekennzeichnet, dass**
die zufällige Manipulation zufälliges Auswählen einer Adresse einer ersten Vielzahl von Bytes in der zweiten Kopie des ausführbaren Codesegments und Verändern, für die Berechnung des zweiten Sicherheitscodes, der ersten Vielzahl von Bytes, die sich an der zufällig ausgewählten Adresse in der zweiten Kopie des ausführbaren Codesegments befinden, umfasst; oder
wobei die zufällige Manipulation zufälliges Auswählen einer Adresse einer ersten Vielzahl von Bytes in der zweiten Kopie des ausführbaren Codesegments und Einfügen, für die Berechnung des zweiten Sicherheitscodes, einer Vielzahl von vordefinierten Datenbytes an der zufällig ausgewählten Adresse in die zweite Kopie des ausführbaren Codesegments umfasst;
wobei das generierte Verifizierungscodesegment derart ausgelegt ist, dass die zufällige Manipulation, die durch das Verifizierungscodesegment auf die erste Vielzahl von Bytes in der zweiten Kopie angewendet wird, identisch ist mit einer zufälligen Manipulation, die durch die Sicherheitssteuerung auf eine erste Vielzahl von Bytes in einer ersten Kopie des ausführbaren Codes, der zum Berechnen des ersten Sicherheitscodes verwendet wird, angewendet wird.

12. Computerlesbares Speichermedium, das Anweisungen umfasst, die durch einen Computer ausführbar sind und bei Ausführung durch den Computer den Computer dazu veranlassen, ein Verfahren nach einem der Ansprüche 8 oder 11 durchzuführen.

## Revendications

1. Dispositif de commande de sécurité (152), comprenant :
une mémoire (404) ; et
un circuit (402) configuré pour :
charger une première copie d'un segment de code exécutable dans la mémoire,
calculer un premier code de sécurité sur la base d'une première copie manipulée de manière aléatoire du segment de code exécutable,
générer un segment de code de vérification adapté pour amener un dispositif protégé à calculer un second code de sécurité sur la base d'une seconde copie manipulée de manière aléatoire du segment de code exécutable lors du chargement de la seconde copie du segment de code exécutable dans une mémoire du dispositif protégé,
transmettre le segment de code de vérification au dispositif protégé,
recevoir le second code de sécurité de l'appareil protégé,
comparer le premier code de sécurité et le second code de sécurité, et
déterminer une compromission du dispositif protégé en réaction au fait que le second code de sécurité ne correspond pas au premier code de sécurité ;
**caractérisé en ce que**
la manipulation aléatoire comprend la sélection aléatoire d'une adresse d'une première pluralité d'octets dans la première copie du segment de code exécutable et la modification, pour le calcul du premier code de sécurité, de la première pluralité d'octets résidant à l'adresse sélectionnée de manière aléatoire dans la première copie du segment de code exécutable ; ou
dans lequel la manipulation aléatoire comprend la sélection aléatoire d'une adresse d'une première pluralité d'octets dans la première copie du segment de code exécutable et l'insertion, pour le calcul du premier code de sécurité, d'une première pluralité d'octets de données prédéfinis à l'adresse sélectionnée de manière aléatoire dans la première copie du segment de code exécutable ;
dans lequel le segment de code de vérification généré est adapté de telle sorte que la manipulation aléatoire appliquée par le segment de code de vérification à la seconde pluralité d'octets dans la seconde copie est identique à la manipulation aléatoire appliquée à la première pluralité d'octets dans la première copie avant de calculer le premier code de sécurité.

2. Dispositif de commande de sécurité selon la revendication 1, dans lequel le circuit est également configuré pour calculer une valeur de hachage sur la base de la première copie du segment de code exécutable à l'aide d'au moins une fonction de hachage, et dans lequel le premier code de sécurité comprend la valeur de hachage.

3. Dispositif de commande de sécurité selon la revendication 1 ou 2, dans lequel le circuit est également configuré pour coder le segment de code de vérification.

4. Dispositif de commande de sécurité selon la revendication 3, dans lequel le circuit est également configuré pour appliquer une cryptographie à boîte blanche pour coder le segment de code de vérification.

5. Dispositif de commande de sécurité selon l'une quelconque des revendications précédentes, dans lequel le circuit est également configuré pour réaliser une session de vérification pour vérifier le segment de code exécutable, et dans lequel la manipulation aléatoire est unique pour la session de vérification, de telle sorte que le segment de code de vérification généré pendant la session de vérification est valide uniquement pour la session de vérification.

6. Dispositif de commande de sécurité selon l'une quelconque des revendications précédentes, dans lequel le circuit est également configuré pour initier une action en réaction au fait que le second code de sécurité n'est pas reçu du dispositif protégé avant l'expiration d'une période de temporisation prédéfinie.

7. Dispositif de commande de sécurité selon la revendication 6, dans lequel l'action initiée comprend au moins l'une parmi la transmission d'un message d'alerte de la compromission, la transmission d'une nouvelle copie du segment de code exécutable au dispositif protégé, le fait d'ordonner au dispositif protégé de redémarrer, et le fait d'ordonner au dispositif protégé de se déconnecter d'au moins un réseau.

8. Procédé mis en œuvre par ordinateur de détection d'un dispositif protégé potentiellement compromis, comprenant :
le chargement (202) d'une première copie d'un segment de code exécutable dans une mémoire d'un dispositif de commande de sécurité ;
le calcul (206) d'un premier code de sécurité sur la base d'une première copie manipulée de manière aléatoire du segment de code exécutable ;
la génération (204) d'un segment de code de vérification adapté pour amener un dispositif protégé à calculer un second code de sécurité sur la base d'une seconde copie manipulée de manière aléatoire du segment de code exécutable lors du chargement de la seconde copie du segment de code exécutable dans une mémoire du dispositif protégé ;
la transmission (208) du segment de code de vérification au dispositif protégé ;
la réception (210) du second code de sécurité de l'appareil protégé ;
la comparaison (212) du premier code de sécurité et du second code de sécurité ; et
le fait de déterminer (214, 216) une compromission du dispositif protégé en réaction au fait que le second code de sécurité ne correspond pas au premier code de sécurité ;
**caractérisé en ce que**
la manipulation aléatoire comprend la sélection aléatoire d'une adresse d'une première pluralité d'octets dans la première copie du segment de code exécutable et la modification, pour le calcul du premier code de sécurité, de la première pluralité d'octets résidant à l'adresse sélectionnée de manière aléatoire dans la première copie du segment de code exécutable ; ou
dans lequel la manipulation aléatoire comprend la sélection aléatoire d'une adresse d'une première pluralité d'octets dans la première copie du segment de code exécutable et l'insertion, pour le calcul du premier code de sécurité, de la première pluralité d'octets de données prédéfinis à l'adresse sélectionnée de manière aléatoire dans la première copie du segment de code exécutable ;
dans lequel le segment de code de vérification généré est adapté de telle sorte que la manipulation aléatoire appliquée par le segment de code de vérification à la seconde pluralité d'octets dans la seconde copie est identique à la manipulation aléatoire appliquée à la première pluralité d'octets dans la première copie avant de calculer le premier code de sécurité.

9. Dispositif protégé (154), comprenant :
une mémoire (414) ; et
un circuit (412) configuré pour :
charger une seconde copie d'un segment de code exécutable dans la mémoire,
recevoir un segment de code de vérification d'un dispositif de commande de sécurité, le segment de code de vérification étant adapté pour amener le dispositif protégé à calculer un second code de sécurité sur la base d'une seconde copie manipulée de manière aléatoire du segment de code exécutable,
exécuter le segment de code de vérification,
calculer le second code de sécurité sur la base de la seconde copie manipulée de manière aléatoire du segment de code exécutable, et transmettre le second code de sécurité au dispositif de commande de sécurité ;
**caractérisé en ce que**
la manipulation aléatoire comprend la sélection aléatoire d'une adresse d'une première pluralité d'octets dans la seconde copie du segment de code exécutable et la modification, pour le calcul du second code de sécurité, de la première pluralité d'octets résidant à l'adresse sélectionnée de manière aléatoire dans la seconde copie du segment de code exécutable ; ou
dans lequel la manipulation aléatoire comprend la sélection aléatoire d'une adresse d'une première pluralité d'octets dans la seconde copie du segment de code exécutable et l'insertion, pour le calcul du second code de sécurité, d'une pluralité d'octets de données prédéfinis à l'adresse sélectionnée de manière aléatoire dans la seconde copie du segment de code exécutable ;
dans lequel le segment de code de vérification généré est adapté de telle sorte que la manipulation aléatoire appliquée par le segment de code de vérification à la première pluralité d'octets dans la seconde copie est identique à une manipulation aléatoire appliquée par le dispositif de commande de sécurité à une première pluralité d'octets dans une première copie du code exécutable utilisé pour calculer un premier code de sécurité.

10. Dispositif protégé selon la revendication 9, dans lequel le circuit est également configuré pour calculer une valeur de hachage sur la base de la copie du segment de code exécutable à l'aide d'au moins une fonction de hachage, et dans lequel le code de sécurité comprend la valeur de hachage.

11. Procédé mis en œuvre par ordinateur pour détecter une compromission sur un dispositif protégé, le procédé comprenant :
le chargement (302) d'une seconde copie d'un segment de code exécutable dans une mémoire du dispositif protégé ;
la réception (304) d'un segment de code de vérification d'un dispositif de commande de sécurité, le segment de code de vérification étant adapté pour amener le dispositif protégé à calculer un second code de sécurité sur la base d'une seconde copie manipulée de manière aléatoire du segment de code exécutable;
l'exécution (306) du segment de code de vérification ;
le calcul du second code de sécurité sur la base de la seconde copie manipulée de manière aléatoire du segment de code exécutable ; et
la transmission (308) du second code de sécurité au dispositif de commande de sécurité ;
**caractérisé en ce que**
la manipulation aléatoire comprend la sélection aléatoire d'une adresse d'une première pluralité d'octets dans la seconde copie du segment de code exécutable et la modification, pour le calcul du second code de sécurité, de la première pluralité d'octets résidant à l'adresse sélectionnée de manière aléatoire dans la seconde copie du segment de code exécutable ; ou
dans lequel la manipulation aléatoire comprend la sélection aléatoire d'une adresse d'une première pluralité d'octets dans la seconde copie du segment de code exécutable et l'insertion, pour le calcul du second code de sécurité, d'une pluralité d'octets de données prédéfinis à l'adresse sélectionnée de manière aléatoire dans la seconde copie du segment de code exécutable ;
dans lequel le segment de code de vérification généré est adapté de telle sorte que la manipulation aléatoire appliquée par le segment de code de vérification à la première pluralité d'octets dans la seconde copie est identique à une manipulation aléatoire appliquée par le dispositif de commande de sécurité à une première pluralité d'octets dans une première copie du code exécutable utilisé pour calculer un premier code de sécurité.

12. Support lisible par ordinateur comprenant des instructions exécutables par un ordinateur, qui, lorsqu'elles sont exécutées par l'ordinateur, amènent l'ordinateur à réaliser un procédé selon la revendication 8 ou 11.
